Europäisches Patentamt

European Patent Office

Office européen des brevets

(11) Veröffentlichungsnummer: **0 332 976**

**A2**

## (12) EUROPÄISCHE PATENTANMELDUNG

(21) Anmeldenummer: 89103928.1

(22) Anmeldetag: 06.03.89

(51) Int. Cl.⁴: **G06F 1/00**

(30) Priorität: 15.03.88 DE 8803518 U

(43) Veröffentlichungstag der Anmeldung:
20.09.89 Patentblatt 89/38

(84) Benannte Vertragsstaaten:
AT BE CH DE ES FR GB GR IT LI LU NL SE

(71) Anmelder: **Nixdorf Computer
Aktiengesellschaft
Fürstenallee 7
D-4790 Paderborn(DE)**

(72) Erfinder: **Hullen, Joachim
Konrad-Martin-Platz 7
D-4790 Paderborn(DE)**
Erfinder: **Werner, Franz
Stemberg 58
D-4790 Paderborn-Wewer(DE)**

(74) Vertreter: **Schaumburg, Thoenes &
Englaender
Mauerkircherstrasse 31 Postfach 86 07 48
D-8000 München 80(DE)**

(54) **Einrichtung zur lösbaren Montage eines Gerätes an einem Gerätesockel.**

(57) Die Erfindung betrifft eine Einrichtung zur lösbaren Montage eines Gerätes an einem Gerätesockel, mit einem geräteseitigen Adapterteil und einem mit diesem kuppelbaren sockelseitigen Adapterteil. An einem ersten (14) der Adapterteile ist wenigstens ein quer zur Kupplungsrichtung zwischen einer Verriegelungsstellung und einer Entriegelungsstellung gegen Federkraft verschiebbares Riegelelement (26) angeordnet , welches bei gekuppelten Adapterteilen (2, 14) hinter eine am zweiten Adapterteil (2) ausgebildete Riegelfläche greift. Am Riegelelement (26) und am ersten Adapterteil (14) sind miteinander zusammenwirkende, bei der Entriegelungsstellung des Riegelelementes einrastende, wahlweise ausrastbare Rastelemente (52, 54) ausgebildet. Zum selbsttätigen Ausrasten der Rastelemente bei der Montage sind am zweiten Adapterteil (2) Betätigungsmittel (58, 60) angeordnet, welche sich beim Kuppeln der Adapterteile (2, 14) gegen wenigstens eine an den Rastelementen (52, 54) des ersten Adapterteils (14) und/oder des Riegelelementes (26) ausgebildete Betätigungsfläche (62) anlegen und die Rastelemente (52; 54) in Ausraststellung bringen.

Fig.1

Fig.2

# Einrichtung zur lösbaren Montage eines Gerätes an einem Gerätesockel

Die Erfindung betrifft eine Einrichtung der im Oberbegriff des Anspruches 1 genannten Art. In vielen Fällen sind Geräte auf einen beispielsweise stationären Gerätesockel aufsetzbar und mit diesem verriegelbar. Als Beispiele dafür seien Bildschirmgeräte genannt, die auf neigbare Sockel aufgesetzt werden, oder Meßgeräte, die in Fahrzeugen installiert werden sollen. Allgemein bekannt ist eine Befestigung der Geräte durch am Sockel angeordnete, unverlierbare Schrauben, die in die Unterseite der aufgesetzten Geräte eingeschraubt werden. Diese Art der Befestigung ist in der Handhabung sehr unpraktisch, da bei der Montage und der Demontage des Gerätes jeweils im allgemeinen mehrere Schrauben befestigt oder gelöst werden müssen.

Durch die DE-OS 27 12 893 ist eine Einrichtung der im Oberbegriff des Anspruches 1 genannten Art bekannt, bei welcher die Rastelemente sowohl bei der Verriegelungsstellung als auch bei der Entriegelungsstellung der Riegelelemente federnd einrasten, so daß die Riegelelemente sowohl zum Entriegeln als auch zum Verriegeln zunächst von Hand gegen die Federkraft der Rastmittel verschoben werden müssen. Vor allem bei schweren Geräten, die mit beiden Händen gehalten werden müssen, erfordert das Verriegeln nach dem Aufsetzen des Gerätes meist zusätzliche Tiefe, was die praktische Handhabung sehr erschwert.

Es ist die Aufgabe der vorliegenden Erfindung, eine Einrichtung der im Oberbegriff des Anspruches 1 genann ten Art zu schaffen, die eine einfache Montage und Demontage eines Gerätes auf dem Gerätesockel ermöglicht.

Diese Aufgabe ist erfindungsgemäß durch die im Kennzeichen des Anspruches 1 genannten Merkmale gelöst.

Am Gerät und am Gerätesockel sind jeweils ineinander passende Adapterteile angeordnet, die über Zentrierflächen eine korrekte Lage des Gerätes gegenüber dem Gerätesockel gewährleisten. An einem der Adapterteile ist ein quer zur Kupplungsrichtung verschiebbarer Riegel angeordnet, welcher mit einem am anderen Adapterteil ausgebildeten Riegelvorsprung zusammenwirkt und mit einer einzigen Riegelbewegung eine Befestigung des Gerätes auf dem Sockel ermöglicht. Der Riegel ist durch Federmittel in Richtung zu seiner Verriegelungsstellung vorbelastet, so daß er im allgemeinen seine Verriegelungsstellung einnehmen will und nur zum Lösen des Riegels aktiv betätigt werden muß. Um das Aufsetzen des Gerätes zu erleichtern, sind am Riegel und an dem diesen Riegel tragenden ersten Adapterteil miteinander zusammenwirkende Rastmittel ausgebildet, die bei der Entriegelungsstellung des Riegels einrasten. Auf diese Weise kann der Riegel vor dem Aufsetzen des Gerätes auf den Gerätesockel in eine Bereitschaftsstellung eingestellt werden. Das Verriegeln erfolgt in einfacher Weise durch Lösen der Rastmittel, worauf der Riegel durch die Federmittel selbsttätig in seine Verriegelungsstellung bewegt wird.

In bevorzugter Ausgestaltung der Erfindung sind am zweiten Adapterteil Betätigungsmittel vorgesehen, welche sich beim Kuppeln der Adapterteile gegen an wenigstens eine den Rastmitteln des ersten Adapterteils und/oder des Riegels ausgebildete Betätigungsfläche anlegen und die Rastmittel in Ausraststellung bringen. Dadurch wird die Montage des Gerätes nochmals vereinfacht. Die Rastmittel, die den in seine Entriegelungsstellung verschobenen Riegel festhalten, werden beim Aufsetzen des Gerätes durch dieses selbst gelöst, so daß der Riegel in dem Augenblick, in dem die beiden Adapterteile gekuppelt sind, in seine Verriegelungsstellung schnappt.

In weiterer Ausgestaltung der Erfindung ist vorgesehen, daß an dem Riegelelement einerseits und an dem mit diesem zusammenwirkenden Riegelvorsprung andererseits jeweils zusammenwirkende Betätigungsflächen ausgebildet sind, welche beim Kuppeln der Adapterteile zur gegenseitigen Anlage kommen und den Riegel gegen die Kraft der Federmittel aus der Verriegelungsstellung in Richtung der Entriegelungsstellung in eine Riegelbereitschaftsstellung verschieben können. Diese Ausgestaltung ermöglicht es, das Gerät auch dann zu montieren, wenn der Riegel seine Verriegelungsstellung einnimmt. Durch die am Riegelelement und am Riegelvorsprung ausgebildeten Betätigungsflächen wird beim Aufsetzen des Gerätes der Riegel selbsttätig aus der Verriegelungsstellung verschoben, so daß ein Kuppeln der Adapterteile möglich ist. Wenn die Kupplungsstellung erreicht ist, schnappt der Riegel wiederum selbsttätig in seine Verriegelungsstellung. Diese Ausgestaltung bietet eine besondere Sicherheit bei einer Fehlfunktion der Rastmittel des Riegels oder auch der Betätigungsmittel zum Lösen dieser Rastmittel, wie anhand des Ausführungsbeispieles näher erläutert wird.

Für die Demontage des Gerätes wird im allgemeinen der Riegel in seine Entriegelungsstellung verschoben und in dieser durch die Rastmittel festgehalten. Um die vorne beschriebene, sichere Verriegelungsstellung des Riegels nach der Demontage des Gerätes wieder herzustellen, können in weiterer Ausgestaltung der Erfindung am zweiten Adapterteil zusätzliche Betätigungsflächen vorgesehen sein, welche sich beim Entkuppeln der Adapterteile gegen an den Rastmitteln des ersten Adapterteils und/oder des Riegels ausgebildete weitere Betätigungsflächen anlegen und diese in Ausraststellung bringen. Der zum Freigeben der Verriegelung in seine Entriegelungsstellung bewegte und dort verrastete Riegel wird auf diese Weise nach Freigabe des zweiten Adapterteils durch dieses selbst wieder gelöst, so daß er durch die Federmittel in seine Verriegelungsstellung verschoben wird.

In konstruktiver Ausgestaltung der Erfindung ist vorgesehen, daß das sockelseitige Adapterteil etwa die Form einer rechteckigen Platte hat, daß das Riegelelement etwa die Form eines rechteckigen Rahmens hat, der mit seinen einander gegenüberliegenden Längsseiten verschiebbar an dieser Platte gelagert ist, daß an dem Rahmen mehrere Riegelköpfe ausgebildet sind und daß das geräteseitige Adapterteil ebenfalls etwa die Form eines rechteckigen Rahmens hat, an welchem mehrere, jeweils einem Riegelkopf des Rahmens zugeordnete Riegelvorsprünge ausgebildet sind. Diese Konstruktion gewährleistet, daß das Gerät an mehreren Stellen mit dem Gerätesockel verriegelt wird, so daß ein sicherer Halt gewährleistet ist; auch bei Ausfall eines Riegelkopfes beispielsweise ist das Gerät über die anderen Riegelköpfe ausreichend sicher am Gerätesockel fixiert.

Die das sockelseitige Adapterteil bildende Platte und der das geräteseitige Adapterteil bildende Rahmen sind vorzugsweise aus Kunststoff. Der das Riegelelement bildende Rahmen ist vorzugsweise als Blechstanzteil ausgebildet.

Ein Ausführungsbeispiel der Erfindung ist in der Zeichnung dargestellt und im folgenden näher beschrieben. Es zeigen:

Fig. 1 in perspektivischer Darstellung ein geräteseitiges Adapterteil in Form eines Rahmens;

Fig. 2 in perspektivischer Darstellung ein sockelseitiges Adapterteil in Form einer Platte, mit einem Riegelelement;

Fig. 3 in vergrößerter Darstellung Einzelheiten des geräteseitigen bzw. sockelseitigen Adapterteils;

Fig. 4 in vergrößerter Darstellung Einzelheiten der am sockelseitigen Adapterteil bzw. dem Riegel ausgebildeten Rastelemente;

Fig. 5a-c schematisch die Rastelemente in verschiedenen Phasen.

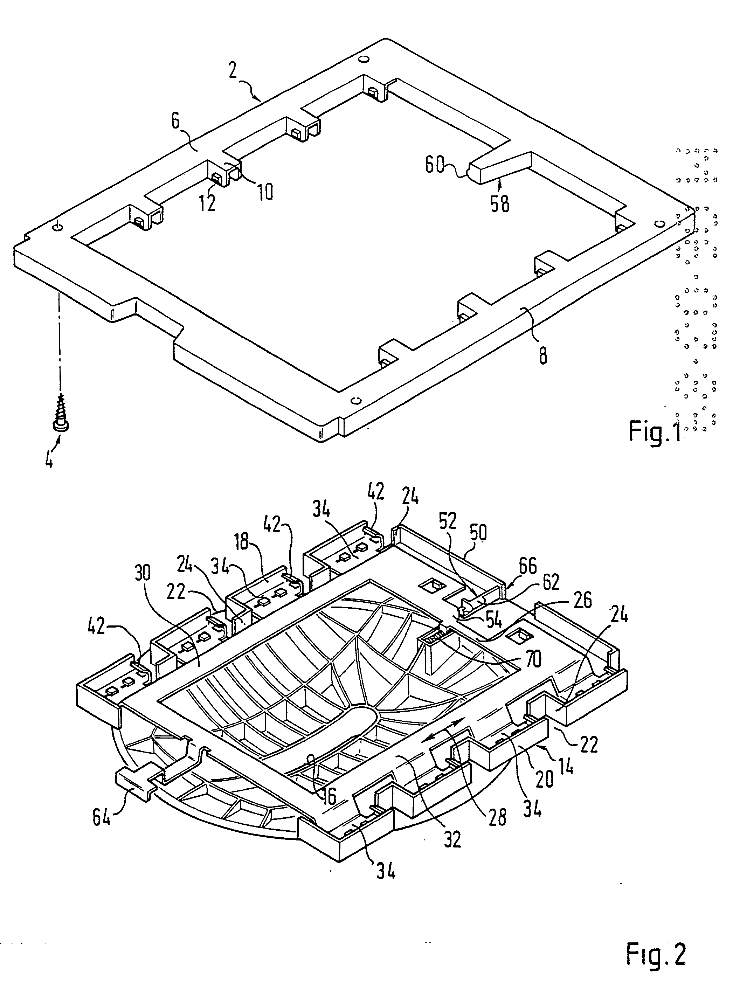

Fig. 1 zeigt ein geräteseitiges Adapterteil 2, welches als Rahmen ausgebildet ist und über Schrauben 4 an der Unterseite eines nicht dargestellten Gerätes, beispielsweise eines Bildschirmgerätes, angeschraubt werden kann. Das Adapterteil 2 besitzt an seinen beiden gegenüberliegenden Längsseiten 6,8 jeweils mehrere zum Rahmeninneren weisende Vorsprünge 10, an denen jeweils ein Riegelvorsprung 12 ausgebildet ist.

Fig. 2 zeigt ein sockelseitiges Adapterteil 14, welches im wesentlichen die Form einer Platte hat und beispielsweise über eine durch einen zentralen Schlitz 16 hindurchgreifende Schraube mit einem Gerätesockel verbunden ist; die Unterseite des Adapterteils 14 hat beispielsweise die Form einer Kugelkalotte, die in einer komplementär geformten Pfanne des Gerätesockels aufgenommen ist, wie an sich bekannt und deshalb nicht im einzelnen dargestellt ist. Das sockelseitige Adapterteil kann demnach nach Lösen der den Schlitz 16 durchgreifenden Schraube nach Bedarf geneigt werden.

Die Außenabmessungen des sockelseitigen Adapterteils 14 entsprechen etwa den Innenabmessungen des geräteseitigen Adapterteils 2, so daß letzteres auf das erstere aufgesetzt werden kann. In den senkrecht auf der Platte stehenden Randstegen 18, 20 sind jeweils Ausnehmungen 22 ausgebildet, in die die Vorsprünge 10 beim Aufsetzen des Adapterteils 2 auf das Adapterteil 14 eingreifen. Die Randstege 18,20 setzen sich im Bereich der Ausnehmungen 22 jeweils in nach innen stehenden, rechtwinkligen Wandabschnitten 24 fort, deren Form und Abmessungen so sind, daß sie sich bei gekuppelten Adapterteilen 2,14 an die Vorsprünge 10 anlegen; die Wandabschnitte 24 und die diesen zugeordneten Außenflächen der Vorsprünge 10 bilden auf diese Weise Zentrierflächen, die eine lagerichtige Kupplung der Adapterteile 2,14 sicherstellen.

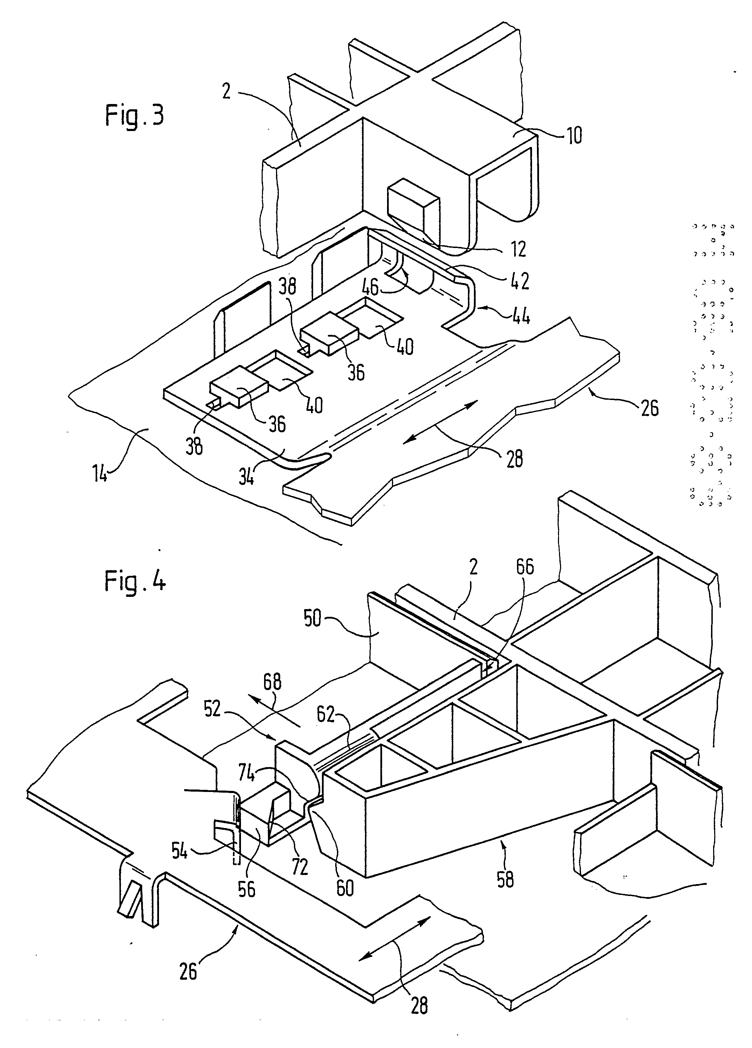

Auf der das sockelseitige Adapterteil 14 bildenden Platte ist ein Riegelelement 26 in Richtung des Doppelpfeiles 28 verschiebbar gelagert. Das Riegelelement 26 ist als Blechstanzteil ausgebildet und hat etwa die Form eines rechteckigen Rahmens. An den Längsseiten 30,32 des Riegelelementes 26 sind jeweils mehrere nach unten abgekröpfte Fußplatten 34 angeordnet, die verschiebbar auf der Oberseite des sockelseitigen- Adapterteils 14 aufliegen. Wie insbesondere Fig. 3 zeigt, werden die Fußplatten 34 gegen Abheben vom Adapterteil 14 durch an diesem ausgebildete, nach oben stehende Führungspilze 36 gesichert, welche jeweils durch in der Fußplatte ausgebildete Führungsschlitze 38 hindurchgreifen und die Führungsschlitzränder übergreifen. An die Führungsschlitze 38 schließen sich jeweils Öffnungen 40 an, durch die die Köpfe der Führungspilze zum Zwecke der Montage des Riegelelementes 26 am Adapterteil 14 hindurchtreten können. Die Führungsschlitze 38 haben eine Länge, die etwa dem Verschiebeweg des Riegelelementes 26 zwischen der Verriegelungsstellung und der Entriegelungsstellung entspricht.

Wie die Fig. 2 und insbesondere die Fig. 3 zeigen, ist an jeder Fußplatte 34 jeweils eine in Richtung der Verriegelungsstellung abstehende, in Form eines in Richtung der Entriegelungsstellung offenen Halbkreises umgebogene Lasche 52 angeordnet, welche jeweils einen Riegelkopf 44 bildet. An jeder Lasche 42 ist jeweils eine Ausnehmung 46 zur Aufnahme des am Vorsprung 10 des Adapterteils 2 angeordneten Riegelvorsprunges 12 ausgebildet. Der Riegelvorsprung 12 greift bei miteinander gekuppelten Adapterteilen 2,14 und bei in Verriegelungsstellung verschobenem Riegelelement 26 in die Ausnehmung 46 ein, wie weiter hinten ausführlicher beschrieben wird.

Um das Riegelelement 26 in der in Fig. 2 dargestellten Entriegelungsstellung festzuhalten, sind am Riegelelement 26 und am sockelseitigen Adapterteil 14 jeweils zusammenwirkende Rastelemente ausgebildet, die bei der Entriegelungsstellung des Riegelelementes 26 einrasten und dieses arretieren. Wie insbesondere die Fig. 2 und 4 zeigen, ist dazu am Randsteg 50 des Adapterteils 14 ein federnder Rasthaken 52 angeordnet, welcher mit einem am Riegelelement 26 angeordneten laschenartigen Rastvorsprung 54 zusammenwirkt. Bei der in den Figuren 2 und 4 dargestellten Entriegelungsstellung des Riegelelementes 26 liegt der Rastvorsprung 54 an einer Rastfläche 56 des Rasthakens 52 an.

Der Rasthaken 52 kann durch am geräteseitigen Adapterteil 2 angeordnete Betätigungsmittel ausgelenkt werden. Diese Betätigungsmittel sind durch einen zum Rahmeninneren des das Adapterteil 2 bildenden Rahmens gerichteten Bock 58 gebildet, an dessen vorderem, freien Ende ein Betätigungsnocken 60 angeformt ist. Am Rasthaken 52 ist eine Betätigungsfläche 62 vorgesehen, die beim Aufsetzen des Adapterteils 2 auf das Adapterteil 14 mit dem Betätigungsnocken 60 zusammenwirkt.

Die Funktion der Einrichtung ist folgende:

Zum Abnehmen des geräteseitigen Adapterteils 2 vom sockelseitigen Adapterteil 14 wird das Riegelelement 26 über den an diesem angeordneten Handgriff 64 (siehe Fig. 2) in die in den Fig. 2 und 4 dargestellte Entriegelungsstellung verschoben. Dabei geraten die Riegelvorsprünge 12 außer Eingriff mit den Ausnehmungen 46, so daß das Adapterteil nach oben abgehoben werden kann.

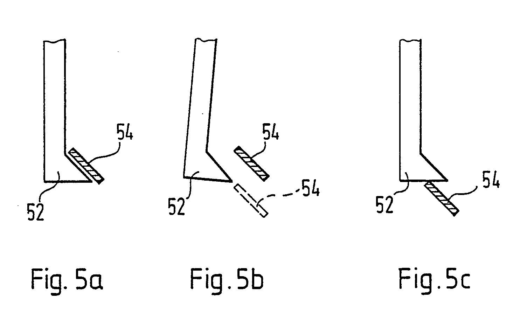

Zum Aufsetzen eines neuen Gerätes nimmt das Riegelelement 26 im allgemeinen seine Entriegelungsstellung ein. Der Bock 58 des Adapterteils 2 tritt in die im Randsteg 50 ausgebildete Ausnehmung 66 ein. Dabei kommt der Betätigungsnocken 60 zur Anlage an die Betätigungsfläche 62, so daß der federnde Rasthaken 52 in Richtung des Pfeiles 68 so weit ausgelenkt wird, bis der Rastvorsprung 54 durch die Rastfläche 56 nicht mehr gestützt wird, so daß das Riegelelement 26 unter der Wirkung der zwischen dem Riegelelement 26 und dem Adapterteil 14 angeordneten Druckfeder 70 in seine Verriegelungsstellung verschoben wird. Wenn der Bock 58 seine in Fig. 4 dargestellte untere Stellung einnimmt, federt der Rasthaken 52 in die in Fig. 4 dargestellte Ausgangslage zurück, wobei sich die Rastfläche 72 des Rasthakens 52 an den Rastvorsprung 54 anlegt, wie Fig. 5a zeigt. Gleichzeitig bewegen sich die Riegelköpfe 44 in ihre Verriegelungsstellung, bei der die Riegelvorsprünge 12 in die Ausnehmungen 46 eingreifen.

Wenn sich beim Aufsetzen eines Gerätes auf den Gerätesockel das Riegelelement 26 bereits in seiner Verriegelungsstellung befindet, dann legt sich beim Aufsetzen des Adapterteils 2 auf das Adapterteil 14 die Schrägfläche des Riegelvorsprunges 12 gegen den oberen Bereich der halbkreisförmig gebogenen Lasche 42 an und schiebt ihn gegen die Kraft der Druckfeder 70 aus der Verriegelungsstellung in Richtung der Entriegelungsstellung so weit zurück, bis die Riegelvorsprünge 12 in die Ausnehmungen 46 einrasten können und das Riegelelement 26 sich unter der Kraft der Druckfeder 70 wieder in die Verriegelungsstellung bewegt.

Zum Abnehmen des geräteseitigen Adapterteils wird das Riegelelement 26 über den Handgriff 64 aus der dargestellten Verriegelungsstellung nach hinten in die Entriegelungsstellung bewegt, wobei die Innenseite des laschenartigen Rastvorsprunges 54 über die Rastfläche 72 den Rasthaken 52 in Richtung des Pfeiles 68 auslenkt, bis er bei der Entriegelungsstellung des Riegelelementes 26 in die in Fig. 4 dargestellte Raststellung zurückfedern kann.

Fig. 5 zeigt den Rasthaken 52 und den laschenartigen Rastvorsprung 54 schematisch in drei verschiedenen Phasen. Fig. 5a zeigt die gegenseitige Stellung, die der Rasthaken 52 und der Rastvorsprung 54 einnehmen, wenn das Riegelelement 26 sich in der Verriegelungsstellung befindet. Fig. 5b zeigt den Rasthaken 52 in seiner in Richtung des Pfeiles 68 ausgelenkten Stellung, bei der der Rastvorsprung 54 sich von der gestrichelt dargestellten Stellung in die mit durchgehenden Linien dargestellte Stellung bewegen und das Riegelelement 26 sich dementsprechend aus der Entriegelungsstellung in die Verriegelungsstellung verschieben kann. Fig. 5c zeigt den Rasthaken 52 und den Rastvorsprung 54 in der Lage, die sie bei der Entriegelungsstellung des Riegelelementes 26 einnehmen. Wie Fig. 4 erkennen läßt, wird der Rasthaken 52 auch dann in Richtung des Pfeiles 68 ausgelenkt, wenn der Bock 58 aus der dargestellten Stellung nach oben bewegt wird, da der Betätigungsnocken 60 zur Anlage an eine untere Betätigungsfläche 74 des Rasthakens 52 kommt. Dadurch werden die Rastmittel 52,54 auch beim Abnehmen eines Gerätes in eine Ausraststellung bewegt, so daß das Riegelelement 26 sich unter der Wirkung der Druckfeder 70 in seine Verriegelungsstellung bewegt. Dadurch ist eine zusätzliche Sicherheit dann gegeben, wenn beim Aufsetzen eines neuen Gerätes die Betätigungsmittel 58,60 für die Rastmittel 52,54 nicht ordnungsgemäß funktionieren, da dann in der schon beschriebenen Weise die Riegelköpfe 44 mit den Riegelvorsprüngen 12 automatisch verrasten.

**Ansprüche**

1. Einrichtung zur lösbaren Montage eines Gerätes an einem Gerätesockel, mit einem geräteseitigen Adapterteil und einem mit diesem kuppelbaren sockelseitigen Adapterteil, die über Zentrierflächen zueinander zentrierbar sind, wobei an einem ersten (14) der Adapterteile wenigstens ein quer zur Kupplungsrichtung zwischen einer Verriegelungsstellung und einer Entriegelungsstellung gegen Federkraft verschiebbares Riegelelement (26) angeordnet ist, welches bei gekuppelten Adapterteilen (2, 14) hinter eine am zweiten Adapterteil (2) ausgebildete Riegelfläche greift, und wobei ferner am Riegelelement (26) und am ersten Adapterteil (14) miteinander zusammenwirkende, bei der Entriegelungsstellung des Riegelelementes einrastende, wahlweise ausrastbare Rastelemente (52, 54) ausgebildet sind, -
dadurch **gekennzeichnet**,
daß Federmittel (70) vorgesehen sind, die das Riegelelement (26) in Richtung zur Verriegelungsstellung hin belasten und daß am zweiten Adapterteil (2) Betätigungsmittel (58, 60) angeordnet sind, welche sich beim Kuppeln der Adapterteile (2, 14) gegen wenigstens eine an den Rastelementen (52, 54) des ersten Adapterteils (14) und/oder des Riegelelementes (26) ausgebildete Betätigungsfläche (62) anlegen und die Rastelemente (52; 54) in Ausraststellung bringen.

2. Einrichtung nach Anspruch 1,
dadurch **gekennzeichnet**,
daß an dem Riegelkopf (44) und an dem Riegelvorsprung (12) jeweils zusammenwirkende Betätigungsflächen ausgebildet sind, welche beim Kuppeln der Adapterteile (2, 14) zur gegenseitigen Anlage kommen und den Riegelkopf (44) gegen die Kraft der Federmittel (70) aus der Verriegelungsstellung in Richtung der Entriegelungsstellung in eine Riegelbereitschaftsstellung verschieben.

3. Einrichtung nach einem der Ansprüche 1 und 2,
dadurch **gekennzeichnet**,
daß am zweiten Adapterteil (2) zusätzliche Betätigungsflächen vorgesehen sind, welche sich beim Entkuppeln der Adapterteile (2, 14) gegen eine an den Rastmitteln (52) des ersten Adapterteils (14) und/oder des Riegels ausgebildete weitere Betätigungsfläche (74) anlegen und die Rastmittel (52, 54) in Ausraststellung bringen.

4. Einrichtung nach einem der Ansprüche 1 bis 3,
dadurch **gekennzeichnet**,
daß am Riegelelement (26) ein Betätigungsgriff (64) angeordnet ist.

5. Einrichtung nach einem der Ansprüche 1 bis 4,
dadurch **gekennzeichnet**,
- daß das sockelseitige Adapterteil (14) etwa die Form einer rechteckigen Platte hat,
- daß das Riegelelement (26) etwa die Form eines rechteckigen Rahmens hat, welcher über an seinen Längsseiten (30, 32) ausgebildete Stützelemente verschiebbar an der Platte gelagert ist,
- daß an dem Rahmen mehrere Riegelköpfe (44) ausgebildet sind, und
- daß das geräteseitige Adapterteil (2) ebenfalls etwa die Form eines rechteckigen Rahmens hat, an welchem mehrere jeweils einem Riegelkopf (44) des Rahmens zugeordnete Riegelvorsprünge (10, 12) ausgebildet sind.

6. Einrichtung nach Anspruch 5,
dadurch **gekennzeichnet**,
daß der das Riegelelement (26) bildende Rahmen an seinen Längsseiten (30, 32) mehrere zu der das sockelseitige Adapterteil (14) bildenden Platte hin abgekröpfte Fußplatten (34) aufweist, und daß in den Fußplatten (34) Führungsschlitze (38) ausgebildet sind, durch die an der Platte ausgebildete Führungspilze (36) hindurchgreifen, deren Köpfe die Führungsschlitzränder übergreifen, und daß sich an die Führungsschlitze (38) jeweils Öffnungen (40) zum Durchstecken der Köpfe der Führungspilze (36) anschließen.

7. Einrichtung nach Anspruch 5 oder 6,
dadurch **gekennzeichnet**,
daß an jeder Fußplatte (34) jeweils eine in Richtung der Verriegelungsstellung abstehende, in Form eines in Richtung der Entriegelungsstellung offenen Halbkreises umgebogene Lasche (42) angeordnet ist und daß jede Lasche (42) eine Ausnehmung (46) zur Aufnahme eines am geräteseitigen Adapterteil (2) ausgebildeten Riegelvorsprunges (12) hat.

8. Einrichtung nach einem der Ansprüche 1 bis 7,
dadurch **gekennzeichnet**,
daß die Rastelemente durch einen am ersten Adapterelement (14) angeordneten, federnd auslenkbaren Rasthaken (52) und einen am Riegelelement (26) ausgebildeten Rastvorsprung (54) gebildet sind.

9. Einrichtung nach einem der Ansprüche 1 bis 8,
dadurch **gekennzeichnet**,

daß zwischen je einer Stützfläche des ersten Adapterteils (14) und des Riegelelementes (26) eine Schraubenfeder (70) angeordnet ist.

10. Einrichtung nach einem der Ansprüche 5 bis 9,

dadurch **gekennzeichnet**,

daß an dem das geräteseitige Adapterteil (2) bildenden Rahmen mehrere jeweils an den Längsseiten (6, 8) des Rahmens angeordnete, zum Rahmeninneren weisende Böcke (10) ausgebildet sind, an denen jeweils ein in Richtung der Entriegelungsstellung des Riegels (26) weisender Riegelvorsprung (12) angeformt ist.

11. Einrichtung nach einem der Ansprüche 8 bis 10,

dadurch **gekennzeichnet**,

daß die Betätigungsmittel durch einen an dem das geräteseitige Adapterteil (2) bildenden Rahmen angeordneten, zum Rahmeninneren gerichteten Bock (58) gebildet sind, an welchem ein Betätigungsnocken (60) angeformt ist, und daß and dem federnden Rasthaken (52) eine beim Kuppeln der Adapterteile (2, 14) mit dem Betätigungsnocken (60) des Bokkes (58) zusammenwirkende Betätigungsfläche (62) ausgebildet ist.

12. Einrichtung nach einem der Ansprüche 5 bis 11,

dadurch **gekennzeichnet**,

daß die das sockelseitige Adapterteil (2) bildende Platte und der das geräteseitige Adapterteil (2) bildende Rahmen aus Kunststoff bestehen.

Fig.1

Fig.2

Fig. 3

Fig. 4

Fig. 5a       Fig. 5b       Fig. 5c